# EUROPEAN PATENT APPLICATION

(11) **EP 4 506 720 A1**
(43) Date of publication of application: **12.02.2025**
(21) Application number: 22936335.3
(22) Date of filing: 23.09.2022
(51) Int. Cl.: G01S 7/481

(54) **SOLID-STATE LIDAR AND CONTROL METHOD FOR SOLID-STATE LIDAR**

(30) Priority: 07.04.2022 CN 202210360990; 05.08.2022 CN 202210947750
(71) Applicant: Hesai Technology Co., Ltd., Shanghai 201815 (CN)
(72) Inventor: LIU, Hao, Shanghai 201821 (CN); ZHU, Xuezhou, Shanghai 201821 (CN); XIANG, Shaoqing, Shanghai 201821 (CN)
(74) Representative: Alatis
(86) International application number: PCT/CN2022/120812
(87) International publication number: WO 2023/193407

(57) **Abstract**

This disclosure provides a solid-state LiDAR and a method for controlling a solid-state LiDAR. The solid-state LiDAR includes: an emitter module and a receiver module, where the emitter module can emit a detection signal, and includes multiple light-emitter units; and the receiver module can receive an echo signal of the detection signal reflected by an obstacle, and includes multiple detector unit groups; and where an emitting sub-field of view corresponding to each light-emitter unit is coincident with a receiving sub-field of view corresponding to at least one detector unit group, and an angular range of the emitting sub-field of view corresponding to each light-emitter unit is greater than an angular range of the receiving sub-field of view corresponding to a coincident detector unit group.

## Description

**This** application claims priority to Chinese Patent Application No. 202210360990.4, filed to the China National Intellectual Property Administration on April 07, 2022 and entitled "SOLID-STATE LIDAR AND CONTROL METHOD FOR SOLID-STATE LIDAR", and Chinese Patent Application No. 202210947750.4, filed to the China National Intellectual Property Administration on August 05, 2022 and entitled "SOLID-STATE LIDAR AND CONTROL METHOD FOR SOLID-STATE LIDAR", the content of both of which is incorporated herein by reference in their entirety.

### TECHNICAL FIELD

Embodiments of this disclosure relate to the field of LiDAR technologies and, in particular, to a solid-state LiDAR ("Light Detection And Ranging") and a method for controlling a solid-state LiDAR.

### BACKGROUND

At present, an existing solid-state LiDAR detects through emitting a laser signal for detection (i.e., detection signal) using a 2-dimensional laser array, and receiving a laser signal of the detection signal reflected by an obstacle (i.e., echo signal) using a 2-dimentional detector arrayto perform detection. Because the solid-state LiDAR has a structural feature of not including a rotary component, compared with other types of LiDAR (e.g., mechanical rotary LiDAR or rotating-mirror scanning LiDAR), the solid-state LiDAR has advantages of a simple structure, a high integration level, or the like, so that the solid-state LiDAR receives a lot of attention from the industry.

However, an existing structure of the solid-state LiDAR has certain limitation, which affectsdetection performance of the solid-state LiDARon. Therefore, how to improve the detection performance of the solid-state LiDAR remains to be solved by those skilled in the art.

### SUMMARY

Given this, embodiments of this disclosure provide a solid-state LiDAR and a method for controlling a solid-state LiDAR, which can improve detection performance.

Embodiments of this disclosure provide a solid-state LiDAR, including: an emitter module and a receiver module, where
the emitter module can emit a detection signal, and the emitter module includes multiple light-emitter units; and
the receiver module can receive an echo signal of the detection signal reflected by an obstacle, and the receiver module includes multiple detector unit groups; and where
an emitting sub-field of view corresponding to each light-emitter unit is coincident with a receiving sub-field of view corresponding to at least one detector unit group, and an angular range of the emitting sub-field of view corresponding to each light-emitter unit is greater than an angle range of the receiving sub-field of view corresponding to a coincident detector unit group.

Optionally, an angle of each emitting sub-field of view in a first direction is greater than an angle of a coincident receiving sub-field of view in the first direction, where the first direction is an arrangement direction of the multiple detector unit groups.

Optionally, an angular difference between each emitting sub-field of view and the coincident receiving sub-field of view in the first direction is at least an angle of a single receiving sub-field of view in the first direction.

Optionally, each emitting sub-field of view is coincident with at least three receiving sub-fields of view.

Optionally, the solid-state LiDAR further includes: a controller module configured to synchronously activate the light-emitter unit and the detector unit group with a coincident field of view.

Optionally, the controller module is configured to determine an address of the detector unit group synchronously activated with each light-emitter unit based on a calibrated field of view coincidence relationship between the emitting sub-field of view and the receiving sub-field of view.

Optionally, the multiple light-emitter units are arranged in a one-dimensional array.

Optionally, the multiple light-emitter units are arranged in a staggered manner.

Optionally, the emitter module further includes: a beam changing unit corresponding to the multiple light-emitter units and configured to perform beam shaping on the detection signal emitted by the light-emitter unit to form the emitting sub-field of view.

Optionally, the beam changing unit is configured to perform the beam shaping in a second direction on the detection signal emitted by the light-emitter unit, and the second direction is a direction perpendicular to an arrangement direction of the multiple light-emitter units.

Optionally, the beam changing unit includes a beam expander or a diffuser.

Optionally, the light-emitter unit includes multiple lasers arranged in a two-dimensional array.

Optionally, the laser includes a vertical-cavity surface-emitting laser.

Embodiments of this disclosure further provide a method for controlling a solid-state LiDAR, where the solid-state LiDAR includes: an emitter module and a receiver module, where the emitter module is configured to emit a detection signal, and includes multiple light-emitter units; the receiver module is configured to receive an echo signal of the detection signal reflected by an obstacle, and includes multiple detector unit groups; and where an angular range of an emitting sub-field of view corresponding to each light-emitter unit is greater than an angular range of a receiving sub-field of view corresponding to the coincident detector unit group; and
the method for controlling the solid-state LiDAR includes a following step:
A) determining a field of view coincidence relationship between the emitting sub-field of view corresponding to the multiple light-emitter units and the emitting sub-field of view corresponding to the multiple detector unit groups, to cause the emitting sub-field of view corresponding to each light-emitter unit to be coincident with the receiving sub-field of view corresponding to at least one detector unit group.
   Optionally, the method for controlling the solid-state LiDAR further includes a following step:
B) calibrating the field of view coincidence relationship between the emitting sub-field of view and the receiving sub-field of view to determine an address of the detector unit group synchronously activated with each light-emitter unit.

Optionally, the step B) includes following steps:
B-1) activating any light-emitter unit based on an existing field of view coincidence relationship to emit the detection signal, and activating a multiple detector unit groups to receive the echo signal, where the multiple detector unit groups at least include a detector unit group determined based on the existing field of view coincidence relationship;
B-2) determining strength of the echo signal respectively received by the multiple detector unit groups; and
B-3) determining a current field of view coincidence relationship based on the strength of the echo signal received by the multiple detector unit groups, and determining whether the existing field of view coincidence relationship deviates from the current field of view coincidence relationship.

Optionally, the step B-3) includes:
determining at least one detector unit group with highest strength of the echo signal among the multiple detector unit groups, and determining the current field of view coincidence relationship with an activated light-emitter unit.

Optionally, the step B) includes a following step:
B-4) when determining a deviation, changing an address of the at least one detector unit group synchronously activated with the activated light-emitter unit based on the current field of view coincidence relationship.

Optionally, the step B) includes following steps:
B-a) measuring a current temperature of the solid-state LiDAR;
B-b) determining a current field of view coincidence relationship based on measured current temperature, and determining whether the current field of view coincidence relationship deviates from the existing field of view coincidence relationship; and
B-c) when determining a deviation, changing an address of the at least one detector unit group synchronously activated with each light-emitter unit based on the current field of view coincidence relationship.

Optionally, the step B-b) includes:
querying a predetermined correspondence relationship between the field of view coincidence relationship and the temperature to determine the current field of view coincidence relationship based on the current temperature.

Optionally, the method for controlling the solid-state LiDAR further includes:
C) controlling synchronous activating of the light-emitter unit and the detector unit group with coincident fields of view based on a calibrated field of view coincidence relationship.

The solid-state LiDAR provided in the embodiments of this disclosure includes the emitter module and the receiver module, where the emitter module includes the multiple light-emitter units, and the receiver module includes the multiple detector unit groups. The emitting sub-field of view corresponding to each light-emitter unit can be coincident with the receiving sub-field of view corresponding to at least one detector unit group. The angular range of the emitting sub-field of view corresponding to each light-emitter unit is greater than the angular range of the receiving sub-field of view corresponding to the coincident detector unit group. Therefore, through the multiple light-emitter units and the multiple detector unit groups, an activated object can be selectively determined based on an actual situation. Power consumption can be reduced. Hardware utilization and activating flexibility can be improved, which results in efficient detection. The angular difference between the angular range of the emitting sub-field of view corresponding to each light-emitter unit and the receiving sub-field of view corresponding to the coincident detector unit group can provide redundancy for the deviation of the emitting sub-field of view of the light-emitter unit. In such a case, loss of echo signal can be reduced, and a detection signal-to-noise ratio can be increased. In such a case, capability of anti-interference between the light-emitter unit and the detector unit group with coincident fields of view can be enhanced. And a field of view coincidence process between the light-emitter unit and the detector unit group can be simplified, which can reduce difficulty of alignment, and improve efficiency and yield of alignment. To sum up, detection performance can be improved using the solid-state LiDAR provided in the embodiments of this disclosure.

### BRIEF DESCRIPTION OF THE DRAWINGS

To describe technical solutions of the embodiments of this disclosure more clearly, drawings used in the description of the embodiments of this disclosure or the prior art are briefly introduced below. It is apparent that the drawings in the following description are only embodiments of this disclosure. Other drawings can be obtained by those of ordinary skill in the art based on the provided drawings without creative efforts.
Fig. 1 shows a schematic structural diagram of a solid-state LiDAR, provided in embodiments of this disclosure.
Fig. 2 and Fig. 3 show schematic diagrams of a field of view coincidence relationship of the solid-state LiDAR shown in Fig. 1.
Fig. 4 shows a schematic structural diagram of another solid-state LiDAR, provided in embodiments of this disclosure.
Fig. 5 shows a schematic structural diagram of another solid-state LiDAR, provided in embodiments of this disclosure.
Fig. 6 shows a schematic structural diagram of another solid-state LiDAR, provided in embodiments of this disclosure.
Fig. 7 shows a schematic diagram of activating control when there is a deviation in an emitting sub-field of view of the solid-state LiDAR shown in Fig. 6.
Fig. 8 shows a schematic diagram of activating control when there is a deviation in another emitting sub-field of view of the solid-state LiDAR shown in Fig. 6.
Fig. 9 shows a schematic structural diagram of an existing area array laser.
Fig. 10 shows a schematic structural diagram of another emitter module, provided in embodiments of this disclosure.
Fig. 11 shows a schematic structural diagram of another emitter module, provided in embodiments of this disclosure.
Fig. 12 shows a flowchart of a method for controlling a solid-state LiDAR, provided in embodiments of this disclosure.
Fig. 13 shows a flowchart of a calibration method, provided in embodiments of this disclosure.
Fig. 14 shows a flowchart of another calibration method, provided in embodiments of this disclosure.

### DETAILED DESCRIPTION

As described in the background, the existing structure of a solid-state LiDAR has certain liminations. For example, in the solid-state LiDAR, there are situations that the alignment between an emission and reception is not ideal. Specifically, an alignment process of emission and reception can be performed between a 2-dimensional laser array and a 2-dimensional detector array in an existing solid-state LiDAR. However, under interference of factors such as poor alignment processes, temperature changes, external impacts, or the like, a field of view can deviate in the 2-dimensional laser array, resulting in a misalignment of field of view between the 2-dimensional laser array and the 2-dimensional detector array. An echo light spot of an echo signal generated on the 2-dimensional detector array can deviate relative to a predetermined position, which can result in loss of optical signal, and reduce accuracy of a detecting result.

For the above problems, embodiments of this disclosure provide a solid-state LiDAR, including an emitter module and a receiver module, where the emitter module includes multiple light-emitter units, and the receiver module includes multiple detector unit groups. An emitting sub-field of view corresponding to each light-emitter unit can be coincident with a receiving sub-field of view corresponding to at least one detector unit group. An angular range of the emitting sub-field of view corresponding to each light-emitter unit is greater than an angular range of the receiving sub-field of view corresponding to the coincident detector unit group.

In such a case, through the multiple light-emitter units and the multiple detector unit groups, an activated object can be selectively determined based on an actual situation. Power consumption can be reduced. Hardware utilization and activating flexibility can be improved, which results in efficient detection. An angular difference between the angular range of the emitting sub-field of view corresponding to each light-emitter unit and the receiving sub-field of view corresponding to the coincident detector unit group can provide redundancy for a deviation of the emitting sub-field of view of the light-emitter unit. In such a case, loss of echo signal can be reduced, and a detection signal-to-noise ratio can be increased. Capability of anti-interference between the light-emitter unit and the detector unit group with coincident fields of view can be enhanced. And a field of view coincidence process between the light-emitter unit and the detector unit group can be simplified, which can reduce difficulty of alignment, and improve efficiency and yield of the alignment.

To make those skilled in the art understand and implement the conception, embodiments, and advantages of technical solutions of this disclosure more clearly, the following detailed description is made with reference to drawings.

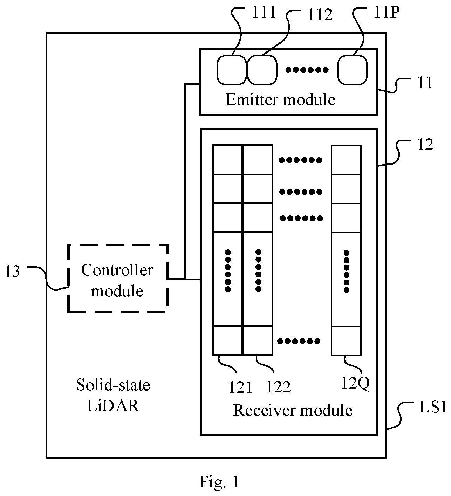

Fig. 1 shows a schematic structural diagram of a solid-state LiDAR, provided in embodiments of this disclosure. In these embodiments, a solid-state LiDAR LS1 can include an emitter module 11 and a receiver module 12.

The emitter module 11 can emit a detection signal. The emitter module 11 includes P light-emitter units (e.g., a light-emitter unit 111 to a light-emitter unit 11P shown in Fig. 1). P is a positive integer greater than one.

The receiver module 12 can receive an echo signal of the detection signal reflected by an obstacle. The receiver module 12 includes Q detector unit groups (a detector unit group 121 to a detector unit group 12Q shown in Fig. 1). Q is a positive integer not less than P. Furthermore, the detector unit group 121 to the detector unit group 12Q can respectively include multiple detection units (not shown in Fig. 1) .

An emitting sub-field of view corresponding to each light-emitter unit in the emitter module 11 can be coincident with a receiving sub-field of view corresponding to at least one detector unit group in the receiver module 12. An angular range of the emitting sub-field of view corresponding to each light-emitter unit in the emitter module 11 is greater than an angular range of the receiving sub-field of view corresponding to a coincident detector unit group in the receiver module 12.

It should be noted that a field of view of the solid-state LiDAR has an angle. An angular range covered by the field of view is an angular range of field of view. Specifically, the field of view of the solid-state LiDAR can include an emitting field of view of the emitter module and a receiving field of view of the receiver module. The emitting field of view of the emitter module includes the emitting sub-field of view corresponding to an activated light-emitter unit. An angular range covered by the emitting sub-field of view is the angular range of the emitting sub-field of view. The receiving field of view of the receiver module includes the receiving sub-field of view corresponding to an activated detector unit group. An angular range covered by the receiving sub-field of view is the angular range of the receiving sub-field of view.

In some actual operations, one or more light-emitter units can be selected from P light-emitter units to be activated based on an actual situation. Accordingly, a detector unit group in Q detector unit groups coincident with field of view of the activated light-emitter unit can be activated. In such a case, through the P light-emitter units and the Q detector unit groups, the activated object can be selectively determined based on the actual situation. The power consumption can be reduced. The hardware utilization and the activating flexibility can be improved, which results in efficient detection.

The angular range of the emitting sub-field of view corresponding to each light-emitter unit in the emitter module 11 is greater than the angular range of the receiving sub-field of view corresponding to the coincident detector unit group in the receiver module 12. In such a case, there is an angular difference between the angular range of each emitting sub-field of view and the coincident receiving sub-field of view. The angular difference can provide redundancy for a deviation in the emitting sub-field of view of each light-emitter unit in the emitter module 11. When the deviation of the emitting sub-field of view corresponding to the light-emitter unit is less than the angular difference, an echo light spot formed by the echo signal can still cover the detector unit group with a coincident field of view, which can ensure that the emitting sub-field of view and the receiving sub-field of view can still be coincident. Loss of echo signal can be reduced, and the detection signal-to-noise ratio can be increased. Furthermore, an impact of interference of factors such as poor alignment processes, temperature changes, external impacts, or the like can be reduced, which can improve the capability of anti-interference between the light-emitter unit and the detector unit group that has coincident fields of view.

Moreover, the emitting sub-field of view and the receiving sub-field of view can still be coincident when the deviation of the emitting sub-field of view corresponding to the light-emitter unit is less than the angular difference. In such a case, difficulty of alignment between the light-emitter unit and the detector unit group can be reduced. The coincidence process of field of view between the light-emitter unit and the detector unit group can be simplified, which can reduce the difficulty of the alignment, and improve the efficiency and the yield of the alignment.

To sum up, detection performance can be improved using the solid-state LiDAR provided in the embodiments of this disclosure.

It can be understood by those skilled in the art that number sequences from the light-emitter unit 111 to the light-emitter unit 11P and from the detector unit group 121 to the detector unit group 12Q from left to right in Fig. 1 are only examples. In other embodiments, the light-emitter unit and the detector unit group can be numbered in other sequences, such as a sequence from right to left, or from center to sides. In such a case, a field of view coincidence relationship for a corresponding number can be determined.

**It** should be further noted that in this disclosure, when a light-emitter unit is activated and emits the detection signal, if the echo signal formed by the detection signal can generate an echo light spot on the receiver module that covers a photosensitive surface of at least one detector unit group, it can be considered that the emitting sub-field of view corresponding to the light-emitter unit is coincident with the receiving sub-field of view corresponding to the covered detector unit group. For understanding and description, the following is described schematically with the drawings and specific field of view coincidence relationships.

In an optional embodiment, continuing with reference to Fig. 1, the field of view coincidence relationship between the light-emitter unit and the detector unit group can be: the emitting sub-field of view corresponding to a certain light-emitter unit 11i in the emitter module 11 can be coincident with the receiving sub-fields of view corresponding to N adjacent detector unit groups 12i to 12(i+N-1) in the receiver module 12.

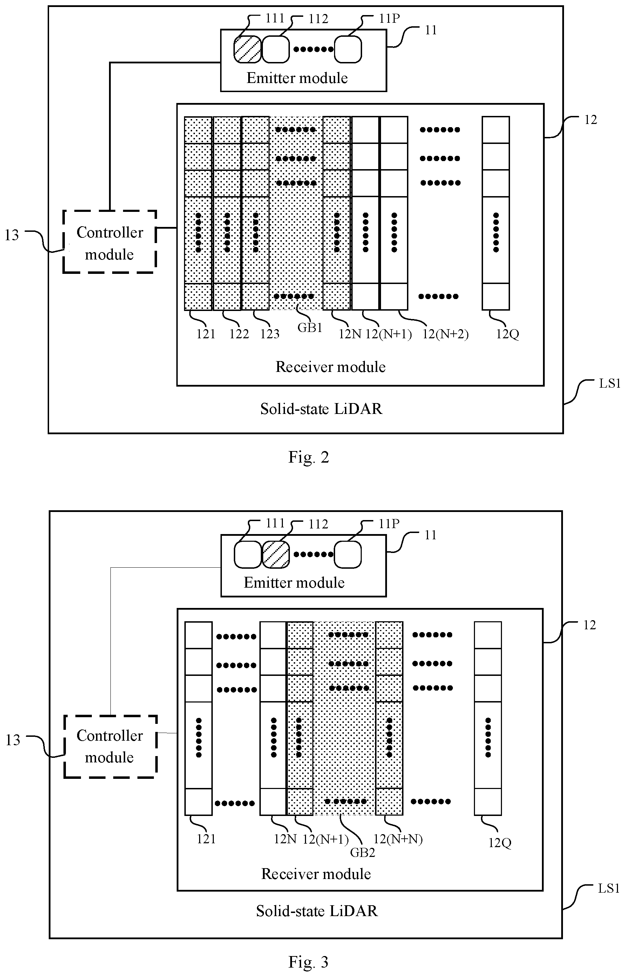

Fig. 2 and Fig. 3 show schematic diagrams of a field of view coincidence relationship of the solid-state LiDAR shown in Fig. 1. In Fig. 2, the light-emitter unit 111 in the emitter module 11 emits the detection signal. An echo signal formed by a detection signal emitted by the light-emitter unit 111 can generate an echo light spot GB1 on the receiver module 12 that covers a photosensitive surface of the detector unit group 121 to a detector unit group 12N. Then photodetection can be performed through the detector unit group 121 to the detector unit group 12N.

In Fig. 3, a light-emitter unit 112 in the emitter module 11 emits the detection signal. An echo signal formed by a detection signal emitted by the light-emitter unit 112 can generate an echo light spot GB2 on the receiver module 12 that covers photosensitive surfaces of a detector unit group 12(N+1) to a detector unit group 12(N+N). Then photodetection can be performed through the detector unit group 12(N+1) to the detector unit group 12(N+N). And so on, all field of view coincidence cases of the emitter module 11 and the receiver module 12 can be determined, and are no longer described herein again.

It can be understood that in practical application, a detector unit group coincident with the field of view of the light-emitter unit can not be an initial detector unit group. For example, continuing with reference to Fig. 1 to Fig. 3, assuming N=2, detector unit groups coincident with the field of view of the light-emitter unit 111 can be detector unit group 122 and detector unit group 123.

Furthermore, based on the specific field of view coincidence relationship, among detector unit groups coincident with fields of view of two light-emitter units respectively, there can be a detector unit group shared by two or more light-emitter units, or there can be no shared detector unit group, and this disclosure is not specifically limited thereto.

In sone embodiments, continuing with reference to Fig. 1 to Fig. 3, if field of view of one detector unit group is coincident with that of each light-emitter unit, that is, N=1, the detector unit group coincident with the field of view of the light-emitter unit 111 can be the detector unit group 121. The detector unit group coincident with the field of view of the light-emitter unit 112 can be the detector unit group 122. In such a case, in the detector unit group coincident with the field of view of each of the light-emitter unit 111 and the light-emitter unit 112, there is no detector unit group shared by different light-emitter units. If fields of view of two detector unit groups are coincident with that of each light-emitter unit, that is, N=2, the detector unit groups coincident with the field of view of the light-emitter unit 111 can be the detector unit group 121 and the detector unit group 122. The detector unit groups coincident with the field of view of the light-emitter unit 112 can be the detector unit group 122 and the detector unit group 123. In such a case, in two detector unit groups coincident with the field of view of the light-emitter unit 111 and the field of view of the light-emitter unit 112 respectively, there are the light-emitter unit 111 and the light-emitter unit 112 (shared detector unit group 122.)

It can also be understood that structures in the drawings of this disclosure are only schematic and are not intended to limit features such as shapes, sizes, gaps, or the like of the light-emitter units, detection units, and detector unit groups. In practical application, the features such as shapes, sizes, gaps, or the like of the light-emitter units, detection units, and detector unit groups can be changed based on specific needs.

In specific embodiments, the emitter module can include a 2-dimensional laser array, where a 1-dimensional laser array corresponding to one or more detector unit groups can be the light-emitter unit, which can achieve coincidence between the emitting sub-field of view and the receiving sub-field of view.

In specific embodiments, the multiple detector unit groups can be arranged in a first direction. To ensure that the echo light spot of the echo signal can cover an expected number of detector unit groups in the first direction, an angle of each emitting sub-field of view in the first direction can be greater than an angle of the coincident receiving sub-field of view in the first direction. For example, continuing with reference to Fig. 1, the detector unit group 121 to the detector unit group 12Q are arranged in a horizontal direction (i.e., the first direction of these embodiments). The angle of the emitting sub-field of view corresponding to each light-emitter unit in the emitter module 11 in the horizontal direction is not less than the angle of at least one coincident receiving sub-field of view in the first direction.

It can be understood that although the multiple detector unit groups in Fig. 1 are arranged in the first direction (i.e., the horizontal direction of an angle of view shown in Fig. 1), an arrangement direction is only schematic, and in practical application, to ensure that field of view coincidence can be achieved, the arrangement direction of the multiple detector unit groups can be determined based on specific needs. In the embodiments of this disclosure, an arrangement of the multiple detector unit groups is not specifically limited.

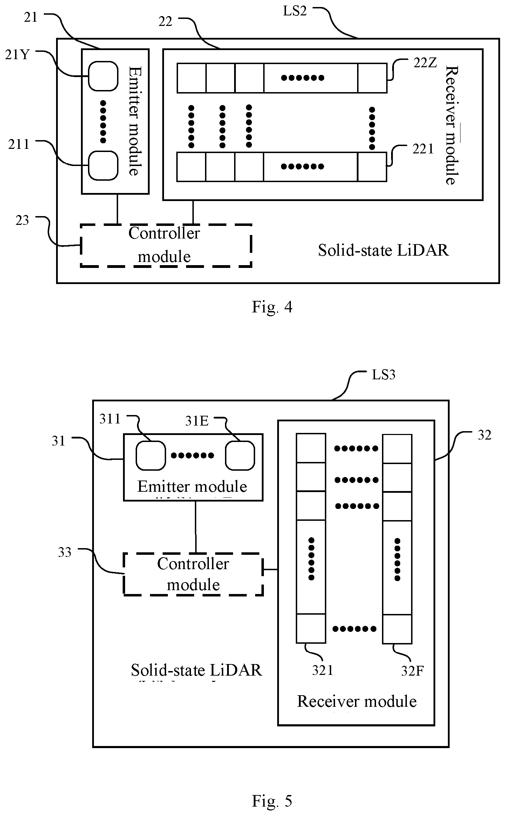

For example, Fig. 4 shows a schematic structural diagram of another solid-state LiDAR consistent with some embodiments of this disclosure. In these embodiments, a solid-state LiDAR LS2 can include an emitter module 21 and a receiver module 22.

The emitter module 21 includes Y light-emitter units (a light-emitter unit 211 to a light-emitter unit 21Y shown in Fig. 4) arranged in a vertical direction (i.e., the first direction of these embodiments), where Y is a positive integer greater than one.

The receiver module 22 includes Z detector unit groups (a detector unit group 221 to a detector unit group 22Z shown in Fig. 4) arranged in the vertical direction, where Z is a positive integer not less than Y Furthermore, the detector unit group 221 to the detector unit group 22Z respectively include the multiple detection units (not shown in Fig. 4.)

An emitting sub-field of view corresponding to each light-emitter unit in the emitter module 21 can be coincident with a receiving sub-field of view corresponding to at least one detector unit group in the receiver module 22, and an angular range of the emitting sub-field of view corresponding to each light-emitter unit in the emitter module 21 is greater than an angular range of the receiving sub-field of view corresponding to a coincident detector unit group in the receiver module 22.

It can be understood that a detailed implementation process and achieved technical effects of the solid-state LiDAR LS2 of this embodiment, or the like can be referred to relevant description of the LiDAR LS1 shown in Fig. 1 to Fig. 3, and is not described herein again.

In specific embodiments, the emitter modules can be arranged around (e.g., upper side, lower side, left side, right side, or the like) the multiple detector unit groups. In this disclosure, relative arrangement positions between the multiple light-emitter units and the multiple detector unit groups are not specifically limited. For ease of understanding, the following provides schematically description through several examples.

For example, referring to Fig. 1 to Fig. 3, the light-emitter unit 111 to the light-emitter unit 11P are arranged on upper sides of the detector unit group 121 to the detector unit group 12Q.

For another example, referring to Fig. 4, the light-emitter unit 211 to the light-emitter unit 21Y are arranged on left sides of the detector unit group 221 to the detector unit group 22Z.

For another example, Fig. 5 shows a schematic structural diagram of another solid-state LiDAR, provided in embodiments of this disclosure. In these embodiments, a solid-state LiDAR LS3 can include: an emitter module 31 and a receiver module 32.

The emitter module 31 includes E light-emitter units (a light-emitter unit 311 to a light-emitter unit 31E shown in Fig. 5), where E is a positive integer greater than one.

The receiver module 32 includes F detector unit groups (a detector unit group 321 to a detector unit group 32F shown in Fig. 5), where F is a positive integer not less than E. Furthermore, the detector unit group 321 to the detector unit group 32F respectively include multiple detection units (not shown in Fig. 5) .

The light-emitter unit 311 to the light-emitter unit 31E are arranged in a one-dimensional array on left sides of the detector unit group 321 to the detector unit group 32F. It can be understood that a detailed implementation process and achieved technical effects of the solid-state LiDAR LS3 of this example, or the like can be referred to relevant description of the LiDAR LS1 shown in Fig. 1 to Fig. 3, and is not described herein again.

In specific embodiments, to ensure that field of view coincidence can be achieved, the arrangement direction of the multiple light-emitter units can be determined based on specific needs. In the embodiments of this disclosure, the arrangement of the multiple light-emitter units is not specifically limited. Further, for ease of the field of view coincidence between the light-emitter unit and the detector unit group, the multiple light-emitter units and the multiple detector unit groups can be arranged in a same direction, that is, the arrangement direction of the multiple light-emitter units is parallel to the arrangement direction of the multiple detector unit groups. Details can be referred to Fig. 1 to Fig. 5, and are not described herein again.

In specific embodiments, the emitting sub-field of view of the light-emitter unit can be configured to make an angular difference between each emitting sub-field of view and the coincident receiving sub-field of view in the first direction to be at least an angle of a single receiving sub-field of view in the first direction. In such a case, redundant receiving sub-field of view is determined for the emitting sub-field of view. When the emitting sub-field of view corresponding to the light-emitter unit deviates, a deviated echo light spot can be ensured to still cover photosensitive surfaces of an expected number of detector unit groups. That is, there are still an expected number of receiving sub-fields of view coincident with the emitting sub-fields of view, which can reduce the loss of optical signal, and ensure detection capability of the solid-state LiDAR.

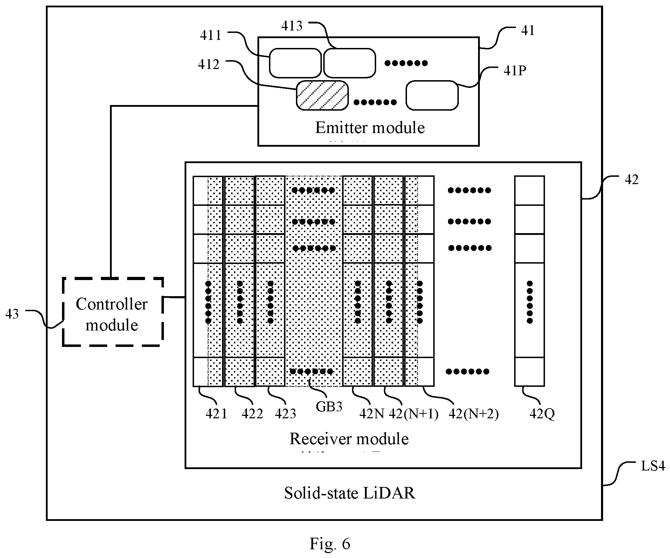

For example, Fig. 6 shows a schematic structural diagram of another solid-state LiDAR, provided in embodiments of this disclosure. In Fig. 6, a solid-state LiDAR LS4 includes an emitter module 41 and a receiver module 42. The emitter module 41 includes P light-emitter units (a light-emitter unit 411 to a light-emitter unit 41P shown in Fig. 6). The receiver module 42 includes Q detector unit groups (a detector unit group 421 to a detector unit group 42Q shown in Fig. 6). Furthermore, the detector unit group 421 to the detector unit group 42Q can respectively include multiple detection units (not shown in Fig. 6) .

A field of view coincidence relationship between the light-emitter unit and the detector unit group can be that an emitting sub-field of view corresponding to a light-emitter unit 41i in the emitter module 41 is coincident with receiving sub-fields of view corresponding to N adjacent detector unit groups 42i to 42(i+N-1) in the receiver module 42. An angular difference between each emitting sub-field of view and N coincident receiving sub-fields of view in the first direction can be the angle of a single receiving sub-field of view in the first direction.

It can be understood that a detailed implementation process and achieved technical effects of the solid-state LiDAR LS4 of this example, or the like can be referred to relevant description of the LiDAR LS 1 shown in Fig. 1 to Fig. 3, and is not described herein again.

Taking the light-emitter unit 412 as an example, an angle of the emitting sub-field of view corresponding to the light-emitter unit 412 in the first direction is a sum of angles of (N+1) receiving sub-fields of view in the first direction. When there is no deviation in the emitting sub-field of view, after the light-emitter unit 412 emits the detection signal, an echo light spot GB3 generated on the receiver module 42 by the echo signal of corresponding reflection can cover the detector unit group 422 to the detector unit group 42(N+1), and the echo light spot GB3 can also cover half of the detector unit group 421 and half of the detector unit group 42(N+2).

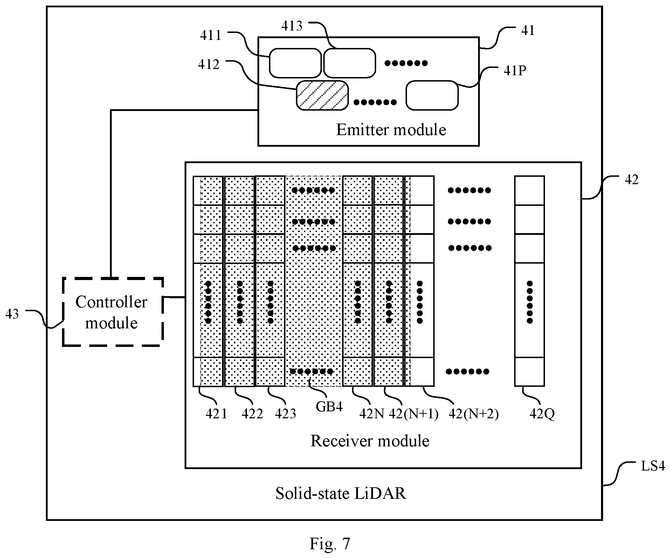

If there is a deviation in the emitting sub-field of view corresponding to the light-emitter unit 412, in some cases, as shown in Fig. 7, the echo signal can generate an echo light spot GB4 on the receiver module 42 with a deviation of no more than half of the detector unit group (Fig. 7 shows a leftward offset). The deviatedecho light spot GB4 can still cover N detector unit groups (i.e., photosensitive surfaces of the detector unit group 422 to the detector unit group 42(N+1)). When the detector unit group 422 to the detector unit group 42(N+1) are activated, photodetection can be performed to reduce loss of optical signal loss, which can ensure the detection capability of the solid-state LiDAR.

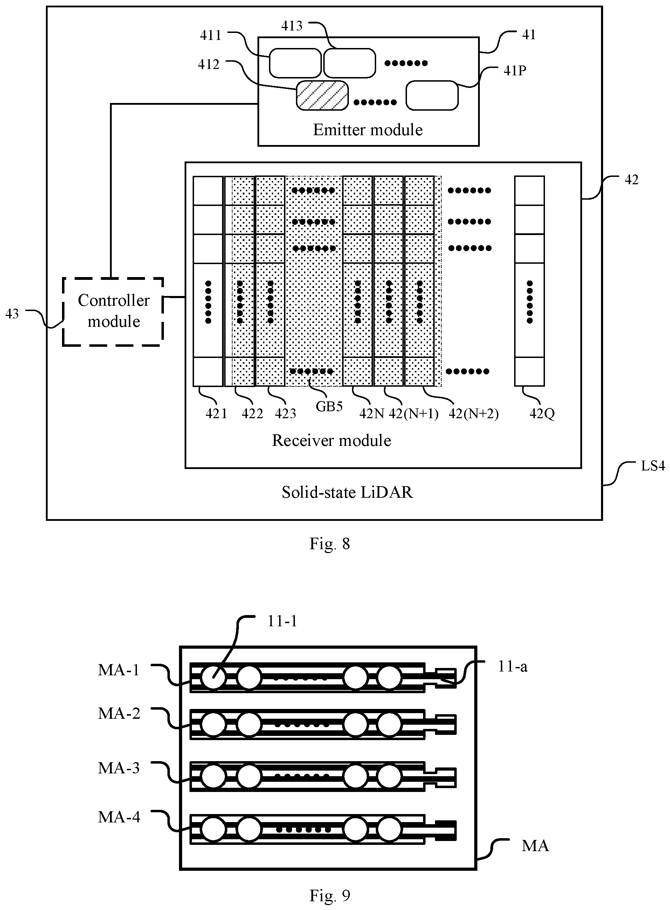

In some other cases, as shown in Fig. 8, the echo signal can generate an echo light spot GB5 on the receiver module 42 with a deviation of more than half of the detector unit group (Fig. 8 shows a rightward deviation). Deviated echo light spot GB5 can still cover photosensitive surfaces of N detector unit groups (i.e., a detector unit group 423 to a detector unit group 42(N+2)). When an activated object changed to the detector unit group 423 to the detector unit group 42(N+2), photodetection can still be performed to reduce loss of optical signal loss, which can ensure the detection capability of the solid-state LiDAR. Similarly, when the echo light spot deviateds leftward relative to a reference shown in Fig. 8, and the deviation exceeds a receiving sub-field of view of one and a half of the detector unit group, the deviated echo light spot can still cover the photosensitive surfaces of the N detector unit groups (which are the detector unit group 421 to the detector unit group 42N in this case). When the activated object is changed to the detector unit group 421 to the detector unit group 42N, the N detector unit groups coincident with one light-emitter unit can still be used to detect the echo signal.

In specific embodiments, when a redundant receiving sub-field of view is determined for each emitting sub-field of view, there can be a situation where one detector unit group does not perform photodetection when each emitting sub-field of view is coincident with one receiving sub-field of view, resulting in a siginificant amount of wasted light energy (e.g., 50% of total light energy of the light-emitter unit can be wasted.) To improve the accuracy of the detecting result and reduce the amount of wasted light energy, each emitting sub-field of view can be coincident with at least three receiving sub-fields of view. In such a case, when only one redundant detector unit group is determined for each light-emitter unit, the amount of wasted light energy is only up to 25%. In such a case, the amounted of wasted light energy can be reduced on the basis of ensuring that the echo light spot generated by the echo signal can completely cover the expected number of detector unit groups (e.g., four detector unit groups).

In specific embodiments, a width of the multiple light-emitter units in the arrangement direction can be increased to make the angular difference between each emitting sub-field of view and the coincident receiving sub-field of view in the first direction to be at least the angle of a single receiving sub-field of view in the first direction. For example, comparing Fig. 1 to Fig. 3 with Fig. 6 to Fig. 8, the width of the light-emitter unit 411 to the light-emitter unit 41P in Fig. 6 to Fig. 8 in the first direction is greater than the width of the light-emitter unit 111 to the light-emitter unit 11P in Fig. 1 to Fig. 3 in the first direction. When a gap between adjacent detector unit groups is ignored, the angular difference between each emitting sub-field of view and the N coincident receiving sub-fields of view in the first direction can be the angle of the single receiving sub-field of view in the first direction.

In specific embodiments, the solid-state LiDAR can further include a controller module, which can control synchronous activating of the light-emitter unit and the detector unit group that have coincident fields of view. In such a case, the activated light-emitter unit and detector unit group can be ensured to perform accurate signal emission and reception.

For example, referring to Fig. 1 to Fig. 3, the solid-state LiDAR LS1 can further include a controller module 13, which can control the synchronous activating of the light-emitter unit and the detector unit group that have the coincident fields of view. Specifically, the controller module 13 can control the synchronous activating of the light-emitter unit and the detector unit group that have the coincident fields of view successively and selectively, based on configured activating parameters (e.g., an activating period and an activating sequence) and the specific field of view coincidence relationship, so that detection signal emission corresponding to the emitting field of view and echo signal reception corresponding to the receiving field of view can be completed within one activating period.

**It** can be understood that there are also controller modules having same or similar functions in other figures. For example, a controller module 23 in Fig. 4, a controller module 33 in Fig. 5, and a controller module 43 in Fig. 6 to Fig. 8, which are not described herein again.

**It** can also be understood that in practical application, a corresponding functional module can also be configured in the solid-state LiDAR based on specific needs. For example, the solid-state LiDAR can further include an optics assembly, which can transmit the detection signal of the emitter module to an outside, and transmit the echo signal to the receiver module. In the embodiments of this disclosure, the type of the functional module specifically included in the solid-state LiDAR is not limited.

**In** specific embodiments, because the emitting sub-field of view corresponding to the light-emitter unit can deviate, the field of view coincidence relationship between the emitting sub-field of view and the receiving sub-field of view can be calibrated when a calibration condition is satisfied. Then the controller module can determine an address of the detector unit group synchronously activated with each light-emitter unit based on a calibrated field of view coincidence relationship between the emitting sub-field of view and the receiving sub-field of view. Therefore, the field of view coincidence relationship can be dynamically changed through calibration of the field of view coincidence relationship to determine the field of view coincidence relationship with higher accuracy, which can ensure that the activated detector unit group in the receiver module can perform the photodetection of the echo signal, which can reduce the loss of optical signal, and improve the accuracy of radar detection.

It can be understood that, in practical application, the field of view coincidence relationship can be calibrated by the controller module. (e.g., in Fig. 1, the controller module 13 can determine an address of at least one detector unit group synchronously activated with each light-emitter unit by calibrating the field of view coincidence relationship.) The field of view coincidence relationship can also be calibrated by a processing module (e.g., a processing chip) provided inside or outside the solid-state LiDAR, and a calibration result can be transmitted to the controller module.

In specific embodiments, calibration conditions for calibrating the field of view coincidence relationship can include at least one of the following: 1) determining whether usage duration of the solid-state LiDAR reaches a predetermined duration, if so, the calibration conditions being satisfied; or 2) determining whether temperature change in the solid-state LiDAR reaches a predetermined change threshold, if so, the calibration conditions being satisfied. Among them, the predetermined duration and the predetermined change threshold can be determined based on a specific scenario.

In specific embodiments, any light-emitter unit can be activated based on an existing field of view coincidence relationship to emit a detection signal, and the multiple detector unit groups are controlled to be activated to receive an echo signal, where the multiple detector unit groups include at least a detector unit group determined based on the existing field of view coincidence relationship. Then, strength of the echo signal respectively received by the activated detector unit group is determined to determine a current field of view coincidence relationship, and whether there is a deviation between the existing field of view coincidence relationship and the current field of view coincidence relationship. The existing field of view coincidence relationship refers to a coincidence relationship between the emitting sub-field of view and the receiving sub-field of view that have been configured in the solid-state LiDAR. The existing field of view coincidence relationship can be stored in a storage module of the solid-state LiDAR to be retrieved by a module (e.g., the controller module or the processing module) for calibrating the field of view coincidence relationship. The current field of view coincidence relationship refers to an actual coincidence relationship between the emitting sub-field of view and the receiving sub-field of view in a current state.

In specific embodiments, when a deviation is determined, the module (e.g., the controller module or the processing module) for calibrating the field of view coincidence relationship can also change, the address of the detector unit group synchronously activated with the gated light-emitter unit based on the current field of view coincidence relationship.

For example, continuing with reference to Fig. 6 to Fig. 8, the controller module 43 can calibrate the field of view coincidence relationship, can activate the light-emitter unit 412 to emit the detection signal based on the current field of view coincidence relationship, and can control the detector unit group 421 to the detector unit group 42(N+1) to be activated to receive the echo signal, including the detector unit group 422 to the detector unit group 42(N+1) determined based on the existing field of view coincidence relationship. Then, the strength of the echo signal respectively received by the detector unit group 421 to the detector unit group 42(N+1) is determined. The current field of view coincidence relationship is then determined based on the strength of the echo signal received by the detector unit group 421 to the detector unit group 42(N+1), and whether there is a deviation between the existing field of view coincidence relationship and the current field of view coincidence relationship is also determined. The controller module 43 changes addresses of N detector unit groups synchronously activated with the light-emitter unit 412 based on the current field of view coincidence relationship.

In specific embodiments, the module (e.g., the controller module or the processing module) for calibrating the field of view coincidence relationship can control a temperature measuring module to measure current temperature of the solid-state LiDAR. Based on the measured current temperature, the current field of view coincidence relationship, and whether there is a deviation between the existing field of view coincidence relationship and the current field of view coincidence relationship can be determined. When the deviation is determined, the address of the detector unit group synchronously activated with the gated light-emitter unit is changed based on the current field of view coincidence relationship.

For example, continuing with reference to Fig. 1, the controller module 13 can calibrate the field of view coincidence relationship, control the temperature measuring module (not shown in the figure) to measure the current temperature of the solid-state LiDAR LS1, then determine the current field of view coincidence relationship based on the measured current temperature to determine whether there is a deviation between the existing field of view coincidence relationship and the current field of view coincidence relationship, and when the deviation is determined, change the address of at least one detector unit group synchronously activated with each light-emitter unit based on the current field of view coincidence relationship.

In practical application, in addition to listed limitations on an existing structure of the solid-state LiDAR, the solid-state LiDAR also has a problem of suboptimal emission performance of the 2-dimensional laser array. Specifically, due to a large area of the 2-dimensional laser array and a long signal transmission path, energy loss of a drive signal can occur during a transmission process. And due to a limitation of driving capability of a laser driver, a laser in the 2-dimensional laser array can not reach expected emission power, resulting in emission efficiency of the 2-dimensional laser array lower than expected.

To facilitate the understanding of the suboptimal emission performance of an existing 2-dimensional laser array, the following provides schematic description through specific examples.

In one optional embodiment, Fig. 9 shows a schematic structural diagram of an existing 2-dimensional laser array. Lasers in an 2-dimensional laser array MA (e.g., laser 11-1 shown in Fig. 9) are divided into four groups. The lasers in each group are arranged in rows in a linear array, and form four linear array lasers (e.g., linear array laser MA-1 to linear array laser MA-4 as shown in Fig. 9). Each linear array laser includes a metal substance (e.g., line filling areas of the linear array laser MA-1 to the linear array laser MA-4 as shown in Fig. 9) which can connect the lasers in the linear array laser. There are gaps among the metal substances of the linear array laser MA-1 to the linear array laser MA-4, and partition structures are formed by the gaps among the metal substances. And pads are formed at right ends of the linear array laser MA-1 to the linear array laser MA-4 (e.g., pad 11-a as shown in Fig. 9) through the metal substances to connect laser drivers. In such a case, signal transmission and synchronous activation are realized, and electrical isolation between the linear array lasers MA-1 and to MA-4 is ensured.

For the 2-dimensional laser array MA in Fig. 9, to arrange the metal substances and the partition structures between the linear array lasers MA-1 to MA-4, a larger area needs to be reserved in the 2-dimensional laser array MA, resulting in an increase in the area of the 2-dimensional laser array MA and the cost. The lasers in the 2-dimensional laser array MA are sparsely distributed, which can reduce a power density of the 2-dimensional laser array MA. And to control the area of the 2-dimensional laser array MA, the arrangement and number of the lasers in the 2-dimensional laser array MA need to be limited, which can also reduce the power density of the 2-dimensional laser array MA.

Furthermore, a difference between a dimension of the linear array lasers MA-1 to laser MA-4 in a laser arrangement direction and a dimension of the linear array lasers in a direction perpendicular to the laser arrangement direction is significant. A ratio of the dimensions in two directions is much greater than 10, and even exceeds 100. The pads for connecting the laser drivers are arranged at end portions of the linear array lasers MA-1 to MA-4, resulting in a long transmission path of the drive signal. The drive signal attenuates on the transmission path, resulting in a reduction in the emission power of the lasers at an end of a linear array. And due to the limitations of capability of the laser driver, the grouped lasers still cannot reach the expected emission power.

In specific embodiments, the multiple light-emitter units can be arranged in a one-dimensional array. In such a case, the cost can be reduced and production yield of the light-emitter unit can be increased by replacing existing 2-dimensional laser array with the multiple light-emitter units arranged in the one-dimensional array. And the transmission path of the drive signal of the light-emitter unit is shortened to reduce the energy loss and drive requirements, which ensuring that the light-emitter unit reaches the expected emission power. Compared with the existing2-dimensional laser array, the multiple light-emitter units arranged in the one-dimensional array have higher emission efficiency, to cause the detection capability of the LiDAR to be improved.

In specific embodiments, emission area of the light-emitter unit can be determined based on performance requirements and hardware configurations of the solid-state LiDAR. For example, the emission area of the light-emitter unit can be determined based on ranging requirement of the solid-state LiDAR, the drive capability of a driver circuit, and the power density of the light-emitter unit.

In specific embodiments, the multiple light-emitter units can be arranged in a staggered manner. In such a case, a limitation on the dimension of the light-emitter unit in the arrangement direction can be reduced, space utilization can be improved, and larger emission area can be configured, which can achieve higher emission power or larger emitting field of view.

For example, as shown in Fig. 6 to Fig. 8, the emitter module 41 can include P light-emitter units arranged in the one-dimensional array in the staggered manner in the first direction. By comparing the emitter module 11 shown in Fig. 1 to Fig. 3 with the emitter module 41 shown in Fig. 6 to Fig. 8, it can be seen that the emitter module 41 has a smaller width in the first direction when the light-emitter unit has the same width in the first direction. When the emitter module 11 and the emitter module 41 have the same width in the first direction, the light-emitter unit 411 to the light-emitter unit 41P can have a larger width in the first direction, or the emitter module 41 can include more than P the light-emitter units.

**In** specific embodiments, to take both emission requirements and an overall volume of the emitter module into consideration, the emitter module further includes: a beam changing unit corresponding to the multiple light-emitter units, which can perform beam shaping on the detection signal emitted by the light-emitter unit to form the emitting sub-field of view. The beam shaping can include operations such as beam expansion and diffuseness. In such a case, the beam shaping is performed on each light-emitter unit by the beam changing unit, and the emission area of the light-emitter unit can be reduced when an expected emitting sub-field of view is formed, which can facilitate arrangement of the light-emitter unit, satisfy the emission requirements, and reduce the overall volume of the emitter module .

In practical application, based on the specific situation and requirements, the beam changing unit can perform the beam shaping in one or more directions on the detection signal emitted by the light-emitter unit. In this disclosure, the direction of the beam shaping is not specifically limited.

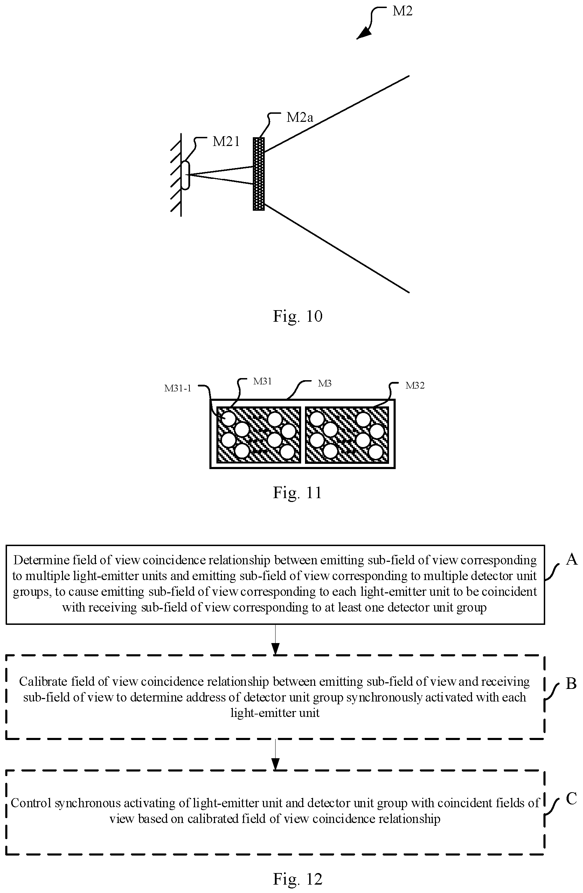

For example, Fig. 10 shows a schematic structural diagram of another emitter module, provided in embodiments of this disclosure. An emitter module M2 can include: a light-emitter unit M21 and a beam changing unit M2a. It should noted that for ease of description, Fig. 10 shows a side view of the emitter module M2, so that only the light-emitter unit M21 can be seen. However, in practical application, the emitter module M2 can further include other light-emitter units arranged in the one-dimensional array with the light-emitter unit M21.

Continuing with reference to Fig. 10, when the light-emitter unit M21 is activated and emits the detection signal, the detection signal passes through the beam changing unit M2a for the beam shaping in a second direction to form a corresponding emitting sub-field of view. The second direction is a direction perpendicular to the arrangement direction of the multiple light-emitter units in the emitter module M2.

With reference to the above description, on the one hand, it can be determined that the beam changing unit can also perform the beam shaping in the arrangement direction on the detection signal, to cause beam shaping in two directions to be realized, and the dimension of the light-emitter unit is reduced, thereby reducing the overall volume of the emitter module. On the other hand, an appropriate width can also be determined for the light-emitter unit in the arrangement direction based on an angle requirement of the emitting sub-field of view in the arrangement direction. In such a case, the beam shaping is only needed in the second direction, and an optical structure is simpler, thereby reducing system complexity.

In practical application, devices having a beam shaping function in the beam changing unit can be determined based on the specific situation. For example, the beam changing unit can include a beam expander or a diffuser.

In specific embodiments, by reducing the dimension of the multiple light-emitter units in the emitter module in the direction perpendicular to the arrangement direction, the multiple light-emitter units can be easy to arrange. The partition structure only needs to be determined between the adjacent light-emitter units, and similar to the dimension of the light-emitter unit, the dimension of the partition structure is also small. In such a case, area utilization of the emitter module can be improved, and the cost can be reduced.

In specific embodiments, a ratio of the dimension of the light-emitter units in two directions can be not greater than two, where the two directions can include the arrangement direction of the light-emitter unit and the direction perpendicular to the arrangement direction. In such a case, the transmission path of the drive signal on the light-emitter unit can be further shortened to make the light-emitter unit capable of emitting light uniformly and with high power.

In specific embodiments, the light-emitter unit can include multiple lasers, and the type of the laser can be selected based on the specific situation and requirements. For example, the laser can include a vertical-cavity surface-emitting laser ("VCSEL") .

In specific embodiments, to improve space utilization, the light-emitter unit can include multiple lasers arranged in a two-dimensional array. In such a case, through denser distribution of the lasers in the light-emitter unit, the area of the emitter module can be smaller than the area of the 2-dimensional laser array when the number of the lasers is the same. In such a case, when the emitter module has an emitting field of view of the same or similar dimension as that of the 2-dimensional laser array, the transmission path of the drive signal of a single-activated light-emitter unit in the emitter module is shorter, to cause the energy lossto be reduced, and driving of the light-emitter unit is facilitated to emit the light uniformly and with the high power.

**In** specific embodiments, the detection unit can include multiple detectors. And the type of the detector can be selected based on the specific situation and requirements. For example, the detector can be a single photon avalanche diode ("SPAD".)

For ease of understanding a structure difference between the existing 2-dimensional laser array and the emitter module provided in the embodiments of this disclosure, the following provides schematical description through specific examples.

Fig. 11 shows a schematic structural diagram of another emitter module, provided in embodiments of this disclosure. An emitter module M3 includes multiple light-emitter units (e.g., a light-emitter unit M31 and a light-emitter unit M32 shown in Fig. 11), where the light-emitter unit M31 and the light-emitter unit M32 are arranged in the one-dimensional array. A laser in each light-emitter unit of the emitter module M3 is electrically connected by a metal substance (oblique line filling areas of the light-emitter unit M31 and the light-emitter unit M32 as shown in Fig. 11), and there are the gaps between the metal substances of the light-emitter unit M31 and the light-emitter unit M32, and partition structures are formed by the gaps among the metal substances. And end portions of the light-emitter unit M31 and the light-emitter unit M32 can be respectively coupled with the laser drivers to achieve signal transmission and synchronous activation.

Comparing the 2-dimensional laser array MA in Fig. 9 with the emitter module M3 in Fig. 11, it can be found that:
For the emitter module M3 in Fig. 11, the dimension of the light-emitter unit M31 and the light-emitter unit M32 in the direction perpendicular to the arrangement direction is small, which can make the light-emitter unit M31 and the light-emitter unit M32 easily arranged. The partition structure is required to be determined only between the adjacent light-emitter units (e.g., between the light-emitter unit M31 and the light-emitter unit M32), and similar to the dimension of the light-emitter unit, the dimension of the partition structure is also small, which can improve the area utilization of the emitter module M3, and the cost. Furthermore, the lasers in the light-emitter unit M31 and the light-emitter unit M32 are arranged more densely (the multiple lasers of the light-emitter unit M31 and the light-emitter unit M32 in Fig. 11 are respectively arranged in the two-dimensional array in the staggered manner), and when the number of the lasers is the same, the area of the emitter module M3 is smaller than the area of the 2-dimensional laser array MA. Accordingly, when the area of the emitter module M3 is the same as the area of the 2-dimensional laser array MA, the emitter module M3 can include more light-emitter units, or the light-emitter unit M31 and the light-emitter unit M32 can include more lasers, to cause light-emitting power density to be increased. In addition, the light-emitter units are arranged in the one-dimensional array. The light-emitter units and the multiple lasers included therein have greater flexibility in arrangement. Compared with laser groups in the 2-dimensional laser array, more lasers can be arranged in the light-emitter units of the embodiments of this disclosure to further increase emission power, which can improve ranging capability of the LiDAR.

Furthermore, because the dimension of the light-emitter unit M31 and the light-emitter unit M32 in the emitter module M3 in the direction perpendicular to the arrangement direction is small, and in particular, the ratio of the dimension of the light-emitter units in the two directions can be not greater than two, compared with the linear array laser MA-1 to the linear array laser MA-4 in the 2-dimensional laser array MA, the transmission path of the drive signal in the light-emitter unit M31 and the light-emitter unit M32 is greatly shortened. In such a case, the expected emission power can be reached, and loss of the drive signal on the transmission path can be reduced, which can make the emission power of the multiple lasers included in the light-emitter unit M31 and the light-emitter unit M32 to be uniform.

In specific embodiments, a separate address is assigned to each light-emitter unit in the emitter module. A separate address is also assigned to each detection unit in the receiver module. The controller module of the solid-state LiDAR can address and control based on the specific field of view coincidence relationship. The receiver module can activate the corresponding detector unit group based on the address of the detector unit group indicated by the controller module (as shown in Fig. 1, the receiver module 12 can activate at least one of the corresponding detector unit groups based on the address of at least one detector unit group indicated by the controller module 13.)

**In** specific embodiments, due to the limited number of ports of the controller module, to improve addressing efficiency and control efficiency and reduce the number of the ports of the controller module, the emitter module further includes an emitting driver circuit separately coupled with the controller module and the multiple light-emitter units. The emitting driver circuit can activate the corresponding light-emitter unit to emit the detection signal based on the address indicated by the controller module.

Similarly, the receiver module further includes a receiving driver circuit separately coupled with the controller module and the multiple detector unit groups. The receiving driver circuit can drive the corresponding detector unit group to receive a signal based on the address of the detector unit group indicated by the controller module.

In specific embodiments, to reduce crosstalk, the emitter module can include multiple emitting driver circuits coupled one-to-one with the multiple light-emitter units in the emitter module. In such a case, independent addressing and independent controlling of the light-emitter unit can be achieved, which can improve stability and controllability of the emitter module.

Similarly, the receiver module can further include multiple receiving driver circuits coupled one-to-one with the multiple detector unit groups in the receiver module. In such a case, independent addressing and independent controlling of the detector unit group can be achieved, which can improve the stability and the controllability of the receiver module.

**It** can be understood that multiple embodiment solutions provided in this disclosure are described above, and that various optional manners introduced by each embodiment solution can be combined and cross-referenced with each other without conflict to extend various possible embodiment solutions, which can all be considered as embodiment solutions disclosed and published in this disclosure.

This disclosure further provides a method for controlling a solid-state LiDAR corresponding to the above solid-state LiDAR. The method is introduced below in detail through specific embodiments with reference to the drawings. It should be noted that a calibration device described below can be considered as a functional module that required to be determined to implement a calibration method provided in this disclosure. The content of the method for controlling the solid-state LiDAR described below can be cross-referenced to the content of the solid-state LiDAR described above.

Fig. 12 shows a flowchart of a method for controlling a solid-state LiDAR, provided in embodiments of this disclosure. In this example, the solid-state LiDAR can include: an emitter module and a receiver module. The emitter module can emit a detection signal, and includes multiple light-emitter units. The receiver module can receive an echo signal of the detection signal reflected by an obstacle, and includes multiple detector unit groups. An angular range of an emitting sub-field of view corresponding to each light-emitter unit is greater than an angular range of a receiving sub-field of view corresponding to the coincident detector unit group.

The method for controlling the solid-state LiDAR can include:
A) determining a field of view coincidence relationship between the emitting sub-field of view corresponding to the multiple light-emitter units and the emitting sub-field of view corresponding to the multiple detector unit groups, to make the emitting sub-field of view corresponding to each light-emitter unit coincident with the receiving sub-field of view corresponding to at least one detector unit group.

In such a case, through the multiple light-emitter units and the multiple detector unit groups, the activated object can be selectively determined based on the actual situation. The power consumption can be reduced, and the hardware utilization and the activating flexibility can be improved, which can achieve the efficient detection. In addition, through the angular difference between the angular range of the emitting sub-field of view corresponding to each light-emitter unit and the receiving sub-field of view corresponding to the coincident detector unit group, the redundancy can be provided for the deviation in the emitting sub-field of view of the light-emitter unit. The capability of anti-interference between the light-emitter unit and the detector unit group that have the coincident fields of view can be enhanced. And the field of view coincidence process between the light-emitter unit and the detector unit group can be simplified, which can reduce the difficulty of the alignment, and improve the efficiency and the yield of the alignment.

To sum up, it can be seen that the detection performance can be improved using the solid-state LiDAR provided in the embodiments of this disclosure.

In specific embodiments, as shown in Fig. 12, the method for controlling the solid-state LiDAR can further include:
B) calibrating the field of view coincidence relationship between the emitting sub-field of view and the receiving sub-field of view to determine an address of the detector unit group synchronously activated with each light-emitter unit.

In such a case, the field of view coincidence relationship can be dynamically changed. The activated detector unit group in the receiver module can be ensured to perform the photodetection of the echo signal, which can reduce the loss of optical signal, and improve the accuracy of the radar detection.

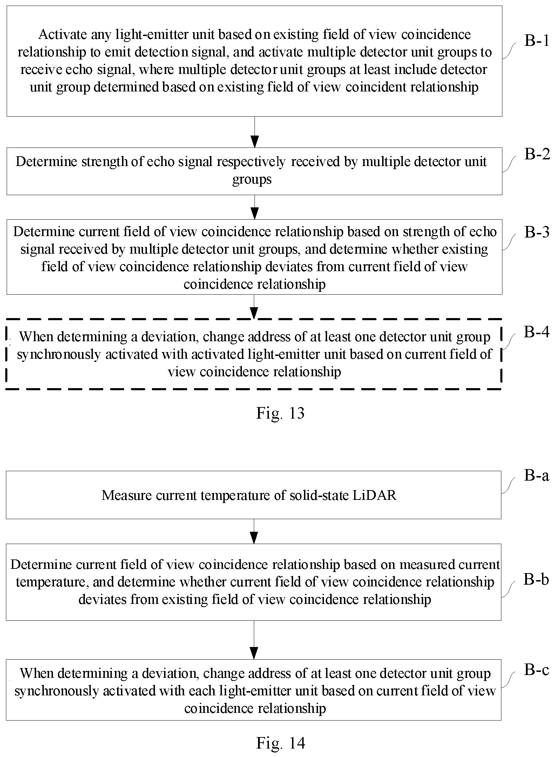

In one optional example, Fig. 13 shows a flowchart of a calibration method, provided in embodiments of this disclosure. In this example, the step B) can include:
B-1) activating any light-emitter unit based on an existing field of view coincidence relationship to emit the detection signal, and controlling the multiple detector unit groups to be activated to receive the echo signal, where the multiple detector unit groups at least include the detector unit group determined based on the existing field of view coincidence relationship;
B-2) determining strength of the echo signal respectively received by the multiple detector unit groups; and
B-3) determining a current field of view coincidence relationship based on the strength of the echo signal received by the multiple detector unit groups, and determining whether there is a deviation between the existing field of view coincidence relationship and the current field of view coincidence relationship.

In such a case, whether the field of view coincidence relationship deviates can be determined using the light-emitter unit and the detector unit group, without changing the structure of the solid-state LiDAR, which can be easy to implement and change.

In specific embodiments, the step B-3) can include: determining at least one detector unit group with highest strength of the echo signal among the multiple detector unit groups, and determining the current field of view coincidence relationship with an activated light-emitter unit. In such a case, the determined current field of view coincidence relationship can be ensured to have the best detection effect.

In specific embodiments, as shown in Fig. 13, the step B) can further include: B-4) when determining that there is a deviation, changing an address of the at least one detector unit group synchronously activated with the activated light-emitter unit based on the current field of view coincidence relationship.

In such a case, the field of view coincidence relationship can be dynamically changed based on the strength of the signal. In such a case, at least one detector unit group with the best detection effect in the receiver module can perform the photodetection, which can reduce the loss of optical signal, and improve the hardware utilization and the detection accuracy of the LiDAR.

In another optional example, Fig. 14 shows a flowchart of another calibration method, provided in embodiments of this disclosure, where the step B) can include:
B-a) measuring a current temperature of the solid-state LiDAR;
B-b) determining the current field of view coincidence relationship based on the measured current temperature, and determining whether there is the deviation between the current field of view coincidence relationship and the existing field of view coincidence relationship; and
B-c) when determining that there is the deviation, changing the address of the at least one detector unit group synchronously activated with each light-emitter unit based on the current field of view coincidence relationship.

In such a case, the field of view coincidence relationship can be dynamically changed based on the current temperature. At least one detector unit group with the best detection effect in the receiver module can perform the photodetection, which can reduce the loss of optical signal, and improve the hardware utilization and the detection accuracy of the LiDAR.

In specific embodiments, a correspondence relationship between the current temperature and the current field of view coincidence relationship can be determined through experimental calibration. In such a case, the step B-b) can include: querying a predetermined correspondence relationship between the field of view coincidence relationship and the temperature to determine the current field of view coincidence relationship based on the current temperature. In such a case, the current field of view coincidence relationship can be rapidly and accurately determined.

In specific embodiments, the method for controlling the solid-state LiDAR can further include:
C) controlling synchronous activating of the light-emitter unit and the detector unit group that have coincident fields of view based on a calibrated field of view coincidence relationship.

In such a case, the light-emitter unit and the detector unit group that have the coincident fields of view can be controlled to be synchronously activated by the calibrated field of view coincidence relationship with higher accuracy, which can reduce the loss of optical signal, and improve the accuracy of the radar detection.

It is to be noted that, in the description of this disclosure, it needs to be understood that terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," or the like which indicate an orientation or positional relationship are based on the orientation or positional relationship shown in the drawings, and are merely for ease of describing this disclosure and simplifying the description, rather than indicate or imply that the apparatus or element referred to must have a specific orientation, be configured and operated in a specific orientation, and thus cannot be understood as a limitation on this disclosure.

It is to also be noted that "an embodiment" or "embodiments" described in this disclosure refers to a particular feature, structure, or characteristic that can be included in at least one implementation of this disclosure. Moreover, in the description of this disclosure, terms "first," "second," or the like are used for descriptive purposes merely, and cannot be construed as indicating or implying relative importance or implicitly specifying the number of technical features indicated. Therefore, features defined by the terms such as "first," "second," or the like can explicitly or implicitly include one or more of such features. Furthermore, the terms "first," "second," or the like are used to distinguish between similar objects, without necessarily describing a particular sequence or representing importance. It can be understood that the terms used in such a way can be exchanged in appropriate circumstances, in order that the embodiments of this disclosure described herein can be implemented in an order other than those illustrated or described herein.

Although the embodiments of this disclosure are disclosed as above, this disclosure is not limited thereto. Any person skilled in the art can make various changes and modifications without departing from the spirit and scope of this disclosure. Therefore, the protection scope of this disclosure should be subject to the scope defined by the claims.

## Claims

1. A solid-state LiDAR, comprising: an emitter module and a receiver module, wherein
the emitter module is configured to emit a detection signal, and the emitter module comprises a plurality of light-emitter units; and
the receiver module is configured to receive an echo signal of the detection signal reflected by an obstacle, and the receiver module comprises a plurality of detector unit groups; and wherein
an emitting sub-field of view corresponding to each light-emitter unit is coincident with a receiving sub-field of view corresponding to at least one detector unit group, and an angular range of the emitting sub-field of view corresponding to each light-emitter unit is greater than an angular range of the receiving sub-field of view corresponding to a coincident detector unit group.

2. The solid-state LiDAR of claim 1, wherein an angle of each emitting sub-field of view in a first direction is greater than an angle of a coincident receiving sub-field of view in the first direction; and wherein the first direction is an arrangement direction of the plurality of detector unit groups.

3. The solid-state LiDAR of claim 2, wherein an angular difference between each emitting sub-field of view and thecoincident receiving sub-field of view in the first direction is at least an angle of a single receiving sub-field of view in the first direction.

4. The solid-state LiDAR of claim 2, wherein each emitting sub-field of view is coincident with at least three receiving sub-fields of view.

5. The solid-state LiDAR of claim 1, further comprising: a controller module configured to synchronously activate the light-emitter unit and the detector unit group with a coincident field of view.

6. The solid-state LiDAR of claim 5, wherein the controller module is configured to determine an address of the detector unit group synchronously activated with each light-emitter unit based on a calibrated field of viewcoincidence relationship between the emitting sub-field of view and the receiving sub-field of view.

7. The solid-state LiDAR of any of claims 1 to 6, wherein the plurality of light-emitter units are arranged in a one-dimensional array.

8. The solid-state LiDAR of claim 7, wherein the plurality of light-emitter units are arranged in a staggered manner.

9. The solid-state LiDAR of claim 7, wherein the emitter module further comprises: a beam changing unit corresponding to the plurality of light-emitter units and configured to perform beam shaping on the detection signal emitted by the light-emitter unit to form the emitting sub-field of view.

10. The solid-state LiDAR of claim 9, wherein the beam changing unit is configured to perform the beam shaping in a second direction on the detection signal emitted by the light-emitter unit, and the second direction is a direction perpendicular to an arrangement direction of the plurality of light-emitter units.

11. The solid-state LiDAR of claim 9, wherein the beam changing unit comprises a beam expander or a diffuser.

12. The solid-state LiDAR of any of claims 1 to 6, wherein the light-emitter unit comprises a plurality of lasers arranged in a two-dimensional array.

13. The solid-state LiDAR of claim 12, wherein the laser comprises a vertical-cavity surface-emitting laser.

14. A method for controlling a solid-state LiDAR, wherein the solid-state LiDAR comprises: an emitter module and a receiver module, wherein the emitter module is configured to emit a detection signal, and comprises a plurality of light-emitter units; the receiver module is configured to receive an echo signal of the detection signal reflected by an obstacle, and comprises a plurality of detector unit groups; and an angular range of an emitting sub-field of view corresponding to each light-emitter unit is greater than an angular range of a receiving sub-field of view corresponding to a coincident detector unit group; and
the method for controlling the solid-state LiDAR comprises the following step:
A) determining a field of view coincidence relationship between the emitting sub-field of view corresponding to the plurality of light-emitter units and the emitting sub-field of view corresponding to the plurality of detector unit groups, to cause the emitting sub-field of view corresponding to each light-emitter unit to be coincident with the receiving sub-field of view corresponding to at least one detector unit group.

15. The method for controlling a solid-state LiDAR of claim 14, further comprising a following step:
B) calibrating the field of view coincidence relationship between the emitting sub-field of view and the receiving sub-field of view to determine an address of the detector unit group synchronously activated with each light-emitter unit.

16. The method for controlling a solid-state LiDAR of claim 15, wherein the step B) comprises the following steps:
B-1) activating any light-emitter unit based on an existing field of view coincidence relationship to emit the detection signal, and activating a plurality of detector unit groups to receive the echo signal, wherein the plurality of detector unit groups at least comprise a detector unit group determined based on the existing field of view coincidence relationship;
B-2) determining strength of the echo signal respectively received by the plurality of detector unit groups; and
B-3) determining a current field of view coincidence relationship based on the strength of the echo signal received by the plurality of detector unit groups, and determining whether the existing field of view coincidence relationship deviates from the current field of view coincidence relationship.

17. The method for controlling the solid-state LiDAR of claim 16, wherein the step B-3) comprises: determining at least one detector unit group with highest strength of the echo signal among the plurality of detector unit groups, and determining the current field of view coincidence relationship with an activated light-emitter unit.

18. The method for controlling the solid-state LiDAR of claim 16, wherein the step B) comprises the following step:
B-4) when determining a deviation, changing an address of the at least one detector unit group synchronously activated with the activated light-emitter unit based on the current field of view coincidence relationship.

19. The method for controlling the solid-state LiDARof claim 15, wherein the step B) comprises the following steps:
B-a) measuring a current temperature of the solid-state LiDAR;
B-b) determining a current field of view coincidence relationship based on measured current temperature, and determining whether the current field of view coincidence relationship deviates from the existing field of view coincidence relationship; and
B-c) when determining a deviation, changing an address of the at least one detector unit group synchronously activated with each light-emitter unit based on the current field of view coincidence relationship.

20. The method for controlling the solid-state LiDAR of claim 19, wherein the step B-b) comprises:
querying a predetermined correspondence relationship between the field of view coincidence relationship and temperature to determine the current field of view coincidence relationship based on the current temperature.

21. The method for controlling the solid-state LiDARof claim 15, further comprising:
C) controlling synchronous activating of the light-emitter unit and the detector unit group with coincident fields of view based on a calibrated field of view coincidence relationship.
